Europäisches Patentamt

**European Patent Office**

Office européen des brevets

(11) Publication number: **0 316 105**

A1

(12) # EUROPEAN PATENT APPLICATION

(21) Application number: **88310303.8**

(51) Int. Cl.⁴ **B23C 5/10**

(22) Date of filing: **02.11.88**

(30) Priority: **07.11.87 GB 8726138**

(43) Date of publication of application:
**17.05.89 Bulletin 89/20**

(84) Designated Contracting States:
**AT BE CH DE ES FR GB GR IT LI LU NL SE**

(71) Applicant: **Marwin Cutting Tools Limited**

**Rothley Leicestershire LE7 7QA(GB)**

(72) Inventor: **Reynolds, Paul Adrian**
**68 The Broadway**
**Oadby Leicester(GB)**

(74) Representative: **Hallam, Arnold Vincent et al**
**E.N. LEWIS & TAYLOR 144 New Walk**
**Leicester LE1 7JA(GB)**

(54) **Endmill.**

(57) An endmill-type rotary tool comprising a tool body (4) adapted to be received in a tool holder of a rotary machine tool, said tool body having one or more helical blade seats (10) defined in a peripheral surface thereof and a helical blade (2) having a helix angle in the range 40° - 60°. The direction of helix of each blade seat and the associated blade can conveniently be opposite to the direction of rotation of the tool body and the blade may be of tungsten carbide or high speed steel, bonded, brazed or clamped or otherwise secured to the or each seat.

FIG. I.

EP 0 316 105 A1

## Endmill

The present invention relates to an endmill-type rotary machine tool and also to a blade for mounting in such a tool. The invention particularly relates to an arrangement of a contoured blade mounted in a tool body for use in a tool holder of a rotary machine tool.

Previously proposed endmill tools comprise a tool body, typically made of a material such as high speed steel, to which one or more helical blades are fixed, the helix angle typically being about 25° of right hand helix for a right hand rotation tool. A method of producing such blades and tools is described in GB 1279 238.

When such a tool is used for example to remove a surface layer of a workpiece in a plane parallel with the axis of tool rotation, the preferred arrangement is for the blade to follow a helical contour about the circumference of the tool body. It has been found that in operating on certain materials the power required for cutting results in slight deflection of the component and/or deflection of the tool body from the desired axis of rotation and a consequent loss of accuracy.

It is an object of the invention to provide a rotary tool having an insert tool blade with the use of which the above and other disadvantages are minimised. According to the present invention; there is provided an endmill-type rotary tool comprising a tool body adapted to be received in a tool holder of a rotary machine tool, said tool body having one or more helical blade seats defined in a peripheral surface thereof and a helical blade having a helix angle in the range 40°-60°. Preferably, the direction of helix of each blade seat and the associated blade is opposite to the direction of rotation of the tool body.

Preferably the helix angle may be approximately 45° and the blade may be of tungsten carbide or high speed steel, bonded, brazed or clamped or otherwise secured to the or each seat. Conveniently, the seat may comprise one or more walls of a helical channel formed in said peripheral surface, an inner diametrical edge of the blade being surrounded by and secured to the walls of the channel. For a brazed blade, the seat conveniently comprises a single side wall and a base forming a generally L shaped seat for the blade. Where the blade is clamped in place, the seat is generally J shaped.

The diameter:length ratio of the tool is conveniently selected to be as large as practically possible so as to produce a tool of optimum stiffness. Furthermore, the on-cut length of a blade is about 180° so as to reduce power consumption. For a 45° helix angle this gives a diameter length ratio of 1:2 for 180° of on cut length and provides two contact points on each blade length but it will be appreciated that the helix angle, on cut lnegth and hence the diameter:length ratio can be varied to suit requirements.

The present invention also provides a helical blade for an endmill-type tool wherein the direction of twist of the helix is opposite to the direction of rotation of the tool.

The provision of such a blade means that the torque and thrust forces work towards sympathetic responses in the machine spindle and workpiece mounting effectively causing them to be forced apart which is easily counteracted and so does not affect accuracy. This is irrespective of the attitude of the machine, i.e. vertical or horizontal.

There will now be described with reference to the drawings, examples of tools and tool blades according to the invention. It will be understood that the description is given by way of example only and not by way of limitation.

In the drawings:

Figures 1 and 2 show a tool blade from opposite edges thereof respectively;

Figure 3 shows diagramatically the cut characteristics of a tool having a blade according to the invention;

Figure 4 is a diagramatic representation of the cutting action of the blade of Figure 3;

Figures 5 and 6 are similar representations to those of Figures 3 and 4, relating to a conventional three-blade tool arrangement having a 25° helix;

Figures 7 and 8 are representations corresponding to Figures 5 and 6 relating to a three blade tool arrangement according to the invention;

Figures 9 and 10 correspond to Figures 5 and 6 showing a conventional four-blade arrangement; and

Figures 11 and 12 correspond to Figures 7 and 8 showing a four blade arrangement according to the invention.

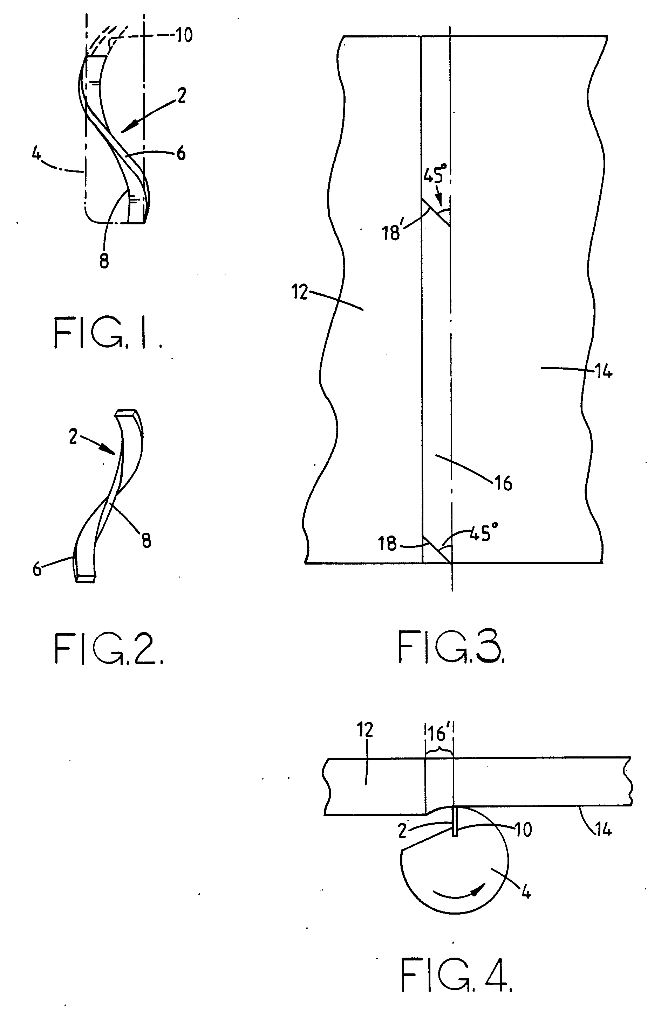

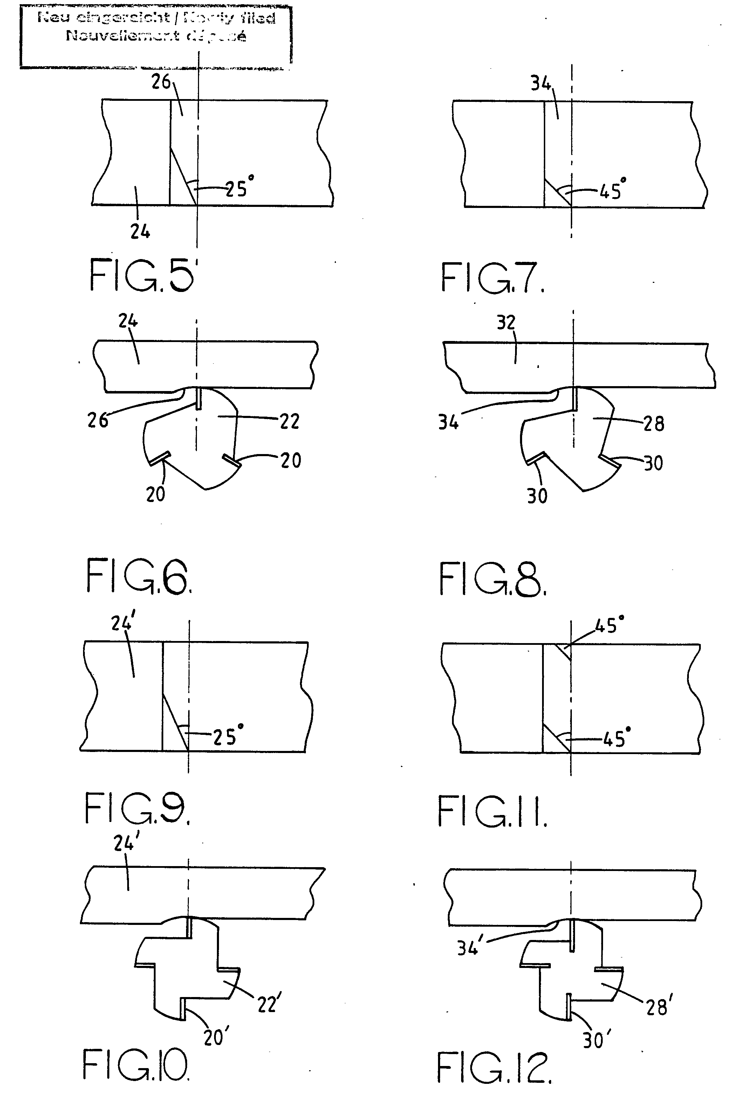

Figure 1 shows a blade 2 adapted to be received in a tool body 4 shown in chain-dotted lines. The blade has an outer, cutting edge 6 and an inner locating edge 8, and is of tungsten carbide. The blade is received in a channel 10 in the tool body 4. The blade 2 is in the form of a helix having an angle of 45° with the rotary axis of the tool body 4 and a diameter: length ration of 2:1. The tool body rotates in a right hand direction.

Figure 3 shows a workpiece 12 from which material has been removed in a region 14 to a depth of 2 mm by rotation of the tool body 4 as illustrated in Figure 4. A strip of material 16 is in contact with the rotating blade 2 at any one time in the cutting operation and an indicating line 18 shows the 45° angle of cut.

Where the tool body is of sufficient length corresponding to the workpiece shown in Figure 3, the blade 2 may be in contact with the strip 16 at two regions, the second being shown at 18. Because the two regions are spaced from one another, it is found that no detectable deflection is imparted to the tool body by the forces generated in the cutting operation.

Figures 5 and 6 show the operation of a conventional tool insert arrangement with three helical blades 20 in a tool body 22. The workpiece 24 is cut progressively in strips 26, and the angle of the cutting action, and therefore of the helices of the blades, is shown as 25° as is conventional.

By contrast, Figures 7 and 8 show an arrangement using a tool body 28 according to the invention with three blades 30. The workpiece 32 is cut progressively in strips 34 and the angle of the cutting action is 45°.

It will be observed that the length of the portion of the blade 30 in contact with the strip 34 is shorter than the length of the portion of the blade 20 in contact with the strip 26. It is because of this reduction in length that less power is required for the cutting action. Because less power is needed there is less pressure on the workpiece and the tool body is less likely to be deflected from the desired axis of rotation. Where the tool body and therefore the blade cutting edges remain true to the surface of the workpiece, then the machining thereof is found to be of an appreciably higher accuracy.

Figures 9 and 10 illustrate a tool body 22' having four conventional blades 20'. The angle of the cutting operation is on the workpiece 24' again 25°. However, in Figures 11 and 12, the tool body 28' is provided with four 45°-helical blades 30' and the increase in this angle will be seen to cause the same blade to be in contact with the strip 34' at two spaced regions. Because of the spacing of the regions the deflecting influence on the tool body is reduced and accuracy of cut is maintained.

Various modifications may be made within the scope of the invention.

## Claims

1. An endmill-type rotary tool comprising a tool body adapted to be received in a tool holder of a rotary machine tool, said tool body having one or more helical blade seats defined in a peripheral surface thereof and a helical blade having a helix angle in the range 40° - 60°.

2. A tool as claimed in claim 1, wherein each blade seat and blade has a direction of helix opposite to the direction of rotation of the tool.

3. A tool as claimed in claim 1 or 2, wherein the helix angle is about 45°.

4. A tool as claimed in claim 1, 2 or 3, wherein the direction of rotation of the tool body is right handed and the direction of twist of the helix is left handed.

5. A tool as claimed in any preceding claim, wherein the diameter:length ratio of the tool is not less than 1:2.

6. A tool as claimed in any preceding claim including three or more helical blades.

7. A helical blade for an endmill-type tool, wherein the direction of twist of helix is opposite to the direction of rotation of the tool.

8. A blade as claimed in claim 5, where the direction of twist is left handed.

FIG. I.

FIG. 2.

FIG. 3.

FIG. 4.

FIG.5

FIG.6.

FIG.9.

FIG.10.

FIG.7.

FIG.8.

FIG.11.

FIG.12.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | PATENT ABSTRACTS OF JAPAN, vol. 11, no. 25 (M-556)[2472], 23rd January 1987; & JP-A-61 197 116 (HITACHI METALS LTD) 01-09-1986 <br> * Figure * | 1,2,4,7 ,8 | B 23 C 5/10 |
| X | EP-A-0 213 334 (KYOCERA CORP.) <br> * Page 3, lines 15-16; figure 1 * | 1-5,7,8 | |
| X | EP-A-0 155 216 (ROY) <br> * Page 2, lines 35-37; page 6, lines 7-8; figures 1,2 * | 1-8 | |

TECHNICAL FIELDS SEARCHED (Int. Cl.4)

B 23 C 5/00

The present search report has been drawn up for all claims

| Place of search | Date of completion of the search | Examiner |
|---|---|---|
| THE HAGUE | 20-02-1989 | BOGAERT F.L. |